# EUROPEAN PATENT APPLICATION

(11) **EP 3 441 130 A1**
(43) Date of publication of application: **13.02.2019**
(21) Application number: 17185606.5
(22) Date of filing: 09.08.2017
(51) Int. Cl.: B01D 65/02

(54) **METHOD AND DEVICE FOR CLEANING A MEMBRANE USING OZONE GAS**

(71) Applicant: Bio-Aqua A/S, 3600 Frederikssund (DK)
(72) Inventor: Jürgensen, Erik Jessen, 4243 Rude (DK); Svendsen, Tore Christian, 4040 Jyllinge (DK)
(74) Representative: Holme Patent A/S

(57) **Abstract**

A method of at least partly restoring functional capacity of at least one membrane (2b) for filtering or separating a flow of liquid particle mixture, wherein the at least one membrane (2b) is situated in a membrane housing (2a) having at least a feed inlet (3) and a permeate outlet (4), wherein the method comprises the steps of emptying the membrane housing (2a) at least partly of liquid particle mixture via an emptying outlet (10), and subjecting the at least one membrane (2b) to a jet of ozone gas crosswise the at least one membrane (2b), which jet is injected into the membrane housing (2a) via an ozone inlet and leaves the membrane housing (2a) via an ozone outlet.

## Description

The present invention relates to a method of at least partly restoring functional capacity of at least one membrane for separating or filtering a flow of liquid particle mixture, wherein the at least one membrane is situated in a membrane housing having at least a feed inlet and a permeate outlet.

Membranes are used for liquid particle separation like filtering wastewater. Accumulation of foulants such as organic compounds on and in the membrane during separation or filtering causes the flow through the membrane to decrease and eventually the membrane has to be cleaned. The cleaning can be done by forcing the filtered wastewater - the permeate - back through the membrane. Often chemical cleaning is necessary.

To remove the organic compounds, chemicals like basic solutions (high pH value) are used. This cleaning process takes long time and produces a lot of chemical mixed water that needs to be transported to a cleaning facility causing a lot of work. The transport and treating of chemicals is not environmentally friendly, must be done under special safety requirements, and is expensive.

The complete cleaning cycle including rinses between stages may take as long as 2 hours to complete. *(*Wallberg, Ola; Jönsson, Ann-Sofi; Wickström, Peter; "Membrane cleaning - a case study in a sulphite pulp mill bleach plant"; Desalination 141 (2001) 259-2 68*.)*

The above-mentioned disadvantages regarding cleaning of membranes used for filtering or separating liquid particle mixture according to the prior art are according to the present invention remedied by,
in a first aspect of the invention providing a cleaning method that is very fast and efficient,
in a second aspect of the invention providing a cleaning method that produce a minimal amount of chemical waste,
in a third aspect of the invention providing a cleaning method that only uses a little amount of energy,
in a fourth aspect of the invention providing a liquid particle separation device that can be cleaned very fast and efficient, and
in a fifth aspect of the invention providing a liquid particle separation device that can be cleaned by only producing a small amount of chemical waste.

Within the scope of the present invention, the term liquid particle mixture means but is not limited to liquid food within the agri-foodstuffs industry, wastewater, discharge water, effluent, exhaust water, sewage or sewage water from private homes, public sector, hospitals, factories, industry like but not limited to agri-foodstuffs industry, agricultural industry, chemical industry, pharmaceutical industry, mining industry, or manufacturing industry.

The novel and unique whereby these and other aspects are achieved according to the present invention consists in the provision of a method that comprises the steps of emptying the at least one membrane housing at least partly of liquid particle mixture via an emptying outlet, and subjecting the at least one membrane to a jet of ozone gas crosswise the at least one membrane, which jet is injected into the membrane housing via an ozone inlet and leaves the membrane housing via an ozone outlet.

The emptying outlet can be situated at the bottom of the membrane housing when restoring functional capacity of the membrane. In that way the membrane housing can be totally or nearly totally emptied by draining the membrane housing by gravity. Optionally, a pump means, fan means or vacuum means could be used to speed up emptying of the membrane housing prior to injection the jet of ozone crosswise the membrane. Optionally, the ozone injection empties the membrane housing of the liquid particle mixture alone or in combination with one or more of gravity, pump means, fan means and vacuum means.

The emptying outlet can be the feed inlet so that the liquid particle mixture in the membrane housing can easily be filtered or separated by the membrane when the functional capacity of the membrane has been restored, and so that a minimum number of extra openings need to be made in an existing membrane housing.

The emptying outlet can include an emptying valve situated on the feed inlet able to control the emptying. The emptying valve can be controlled electronically and from a remote location so that the method can be performed without the need for intervention by man, preferably without any intervention by man at all.

Using ozone gas instead of liquid chemicals like alkali solutions for cleaning the membrane has the advantage that there will be no contaminated water that has to be cleaned at the spot or transported to a cleaning facility. Ozone is an instable compound with a relatively short half-life and ozone will decay rapidly into harmless, useful, ordinary diatomic oxygen. The half-life of ozone in water is shorter than in air and the decomposition of ozone in water is influenced by factors such as temperature, pH, environment, and concentrations of dissolved matter and UV light. In general, it is much simpler, faster, and more cost-effective to get rid of added ozone than of added chemical, thus the use of ozone substantially improves how to restore functional capacity of a water cleaning membrane.

Using ozone gas instead of liquid chemicals is also an advantage when treating food since the removal of ozone gas from the membrane and membrane housing is much easier, faster and cheaper than the removal of the liquid chemical to achieve the level of cleanness and purity stipulated by law when handling foodstuffs.

By emptying the membrane housing so at least a part of the membrane is not covered by liquid particle mixture before the ozone enters the membrane housing it is possible to create an ozone gas atmosphere in the emptied part, where the ozone gas will be in optimum contact with the entire membrane surface so that decomposition of organic matter can take place everywhere on the membrane and the physical injection pressure of the ozone be substantially uniform all over said membrane surface.

Furthermore, by emptying the membrane housing so that the membrane is free of contact with liquid, the concentration of ozone gas can be kept much higher especially in an initial phase, thus instantaneously and homogenous, compared to a cleaning agent that is poured into the membrane housing filled with liquid particle mixture like wastewater, or even into a membrane housing partly emptied of liquid particle mixture. When pouring chemical cleaning agents into the membrane housing to act on the membrane, the entire membrane will be treated inhomogeneously, in that the part of the membrane reached first by poured chemicals will be treated first. If the membrane is not completely covered with the prior art chemical cleansing agents and subjected to treatment during a retaining time some of the membrane may be left untreated and non-functional.

Without any liquid in the emptied part of the membrane housing the ozone gas is able to quickly permeate into all the membrane pores. Therefore, the cleaning time of the membrane is very short - a few minutes compared to hours for conventional cleaning of a membrane.

In an embodiment of the method according to the invention the membrane housing can be emptied by at least 50 vol% of the liquid particle mixture, more preferably at least 70 vol% of the liquid particle mixture, and most preferably at least 90 vol% of the liquid particle mixture. The emptying can typically take place simply by means of gravity.

In an embodiment of the method according to the invention the membrane housing can be emptied of liquid particle mixture by the jet of ozone gas, optionally the membrane housing can be further emptied of liquid particle mixture by the ozone gas until the ratio of the remaining liquid particle mixture and the total volume of the membrane housing is less than 45 vol%, more preferably less than 25 vol%, and most preferably less than 5 vol%.

By using the jet of ozone gas for emptying the membrane housing, the emptying and the restoration of the membrane are done in one single step, which means that the interruption time for cleaning the membrane is short.

Already when half of the membrane housing is emptied the ozone gas can react with a large part of the membrane especially if the membrane is placed high up in the membrane housing.

If at least 70 vol% of the liquid particle mixture, and even better at least 90 vol% of the membrane housing is emptied, a larger part of the membrane will be exposed to the ozone gas and the cleaning process will be even faster.

In an embodiment of the method according to the invention the pressure of the ozone gas can further empty the at least partly empty membrane housing by blowing out at least a part of the remaining liquid particle mixture, as well as blowing out the liquid of the pores of the membrane. So if the membrane housing cannot be totally emptied of the liquid particle mixture by draining or pumping etc., the ozone gas can blow the membrane housing empty, so that the whole membrane can be exposed to the ozone gas and the membrane can be cleaned faster and with the use of minimum of ozone gas.

The ozone gas, or another less expensive pressurized air stream, can also be used for blowing all of the liquid particle mixture out of the membrane housing without prior draining or pumping etc.

In an embodiment of the method according to the invention the direction of the ozone gas through the at least one membrane can be opposite to the flow of liquid particle mixture through the membrane when filtering or separating the liquid particle mixture, thus across the membrane to traverse said membrane so that not only does the ozone act chemically to decompose organic matter in the pore volume of the membrane, the pressure of the ozone gas advantageously also contribute to press any residues of microscopic deposits and fouling out of the pore volume should any remain at all, so that the jet of ozone have synergistic effects on the restoration of the functionality of the membrane inside the housing. The lifetime of the membrane is substantially increased as well as the cleaning time of the membrane is decreased.

It is advantageous that the flow of ozone gas through the membrane is opposite to the flow of liquid particle mixture through the membrane when filtering or separating the liquid particle mixture, since then the fouling can be pressed out of the membrane the same way the fouling is built up. It would take much longer time, if even possible, to press the fouling through the membrane.

That the flow of ozone gas through the membrane is opposite to the flow of liquid particle mixture through the membrane also has the benefit that the fouling is pressed back the same way the fouling arrived. No fouling is forced to enter the filtered or separated liquid or permeate on the permeate outlet side of the membrane.

In an embodiment of the method according to the invention the method further can comprise step c) of flushing permeate collected at the permeate outlet through the membrane after having subjected the membrane to the ozone gas, optionally recycling the flushed permeate to the flow of liquid particle mixture to be filtered or separated by the membrane.

After the ozone gas has cleaned the membrane by blowing and decomposing the fouling in the membrane an additional precaution to make sure that there is no residues of the fouling stuck in and/or on the membrane can be flushing the membrane by the permeate. Flushing the membrane by the permeate is advantageous, since the higher density of the liquid permeate compared to the ozone gas can remove the residues of fouling from the membrane after the fouling has been broken down by the ozone gas. The permeate can also remove the residue by dissolving.

The flushed permeate will not be contaminated and will not need to be removed for special treatment, since ozone gas left in the membrane housing and dissolved by the permeate evaporates and leaves the permeate and breaks down to diatomic oxygen.

In an embodiment of the method according to the invention the permeate can be flushed through the membrane by blowing compressed gas or air through a backflush tank connected to the permeate outlet.

The backflush tank connected to the permeate outlet will collect at least a part of the permeate during the filtering or separation of the liquid particle mixture. The collected permeate in the backflush tank provides enough clean fluid to flush the membrane after the injection of the ozone gas without the need of a long pipe that takes up a lot of space, whereby the apparatus used for performing the method can be made compact.

In an embodiment of the method according to the invention the permeate can be flushed through the membrane by pumping the permeate from a backflush tank connected to the permeate outlet by a permeate pump.

With the same benefits of using the backflush tank as mentioned above, using the pump has the further advantage of transporting/pumping the permeate fast and effectively through the membrane. If the system for filtering or separating a flow of liquid particle mixture is large the pump will be especially advantageous since the pump of the right size can easily pump a large quantity of the permeate within a short time.

The invention further relates to a liquid or water particle separation device comprising at least one membrane situated in a membrane housing, a feed source for feeding liquid particle mixture into the membrane housing, a permeate means for receiving filtered or separated permeate from the membrane housing, and a retentate means, for receiving sludge or particles from the membrane housing, wherein the liquid particle separation device further comprises a means for draining or emptying the membrane housing, and an ozone gas source connected to the membrane housing for injecting ozone gas into the drained or emptied membrane housing, through the at least one membrane, and out of the membrane housing.

The sludge or particles received at the retentate means from the membrane housing is what is left of the liquid particle mixture when the filtered or separated permeate has been removed by permeating through the membrane.

The means, like for example an outlet, a valve, a tube, or the feed source optionally combined with a pump, compressed air/gas or the ozone gas for draining or emptying the membrane housing before or when the ozone gas is injected from the ozone gas source into the membrane housing, through the membrane, and out of the membrane housing, allows the ozone gas to clean the membrane without the membrane or at least a part of the membrane being covered by liquid particle mixture. Without the liquid particle mixture surrounding the membrane the ozone gas has free and rapid access to all of the membrane, including all exterior and interior surfaces, not covered, and the cleaning of the membrane can be provided much faster and more effectively. Without any liquid in the emptied part of the membrane housing the ozone gas is able to quickly permeate into all the membrane pores. Therefore, the cleaning time of the membrane is very short - a few minutes compared to hours for conventional cleaning of a membrane.

Using the ozone gas to empty the membrane housing provides a liquid or water particle separation device that has few movable parts and is simple and reliable.

The means for draining, such like a valve, can be situated at the bottom of the membrane housing when restoring functional capacity of the membrane. In that way, the membrane housing can be totally or nearly totally emptied by draining the membrane housing simply by gravity. Once the valve is closed injected ozone is confined inside the membrane housing.

By emptying the membrane housing, the concentration of ozone gas can be kept much higher especially in an initial phase compared to a cleaning agent that is poured into the membrane housing already filled with liquid particle mixture.

If there are two or more membranes in the membrane housing, the two or more membranes are preferably positioned parallelly to each other. The advantage of having two or more membranes is that it is cheaper to replace one small membrane of several membranes than one large membrane.

In an embodiment of the liquid particle separation device the ozone gas source can be in fluid communication with the membrane housing at the permeate means. This has the advantage that the direction of the ozone gas through the membrane can be opposite to the flow of liquid particle mixture through the membrane when filtering or separating the liquid particle mixture so that fouling is pressed back the same way the fouling arrived, and no fouling is forced to enter the filtered or separated permeate on the permeate outlet side of the membrane.

In an embodiment of the liquid particle separation device the permeate means can have one or more of a permeate line with a permeate valve, a backflush tank between the permeate valve and the membrane housing, and a gas line with compressed air or gas that is connected to the backflush tank.

After the injection of the ozone gas and after the permeate valve has been closed, the membrane can advantageously be flushed by the permeate by pressurizing the permeate by the compressed air or gas. The backflush tank can expediently collect at least a part of the permeate during the filtering or separation of the liquid particle mixture. The collected permeate in the backflush tank provides enough clean fluid to flush the membrane without the need of a long pipe that takes up a lot of space.

The backflush tank can have a valve to easily let out all the gas or air from the backflush tank when filtering or separating the liquid particle mixture so that the backflush tank can be filled with the permeate again.

In an embodiment of the liquid particle separation device the permeate means can comprise one or more of a permeate line with a permeate valve, a backflush tank between the permeate valve and the membrane housing, and a permeate pump connected to the backflush tank for pumping permeate from the backflush tank through the membrane housing and the membrane.

After the injection of the ozone gas and after the permeate valve has been closed, the membrane can advantageously be flushed by the permeate by pumping the permeate by the permeate pump. The backflush tank has in this embodiment the same advantages as mentioned above in connection with pressurizing the permeate by the compressed air or gas.

The permeate pump has the further advantage of transporting/pumping the permeate fast and effectively through the membrane. If the system for filtering or separating a flow of liquid particle mixture is large the pump will be especially advantageous since the pump of the right size can easily pump a large quantity of the permeate within a short time.

In an embodiment of the liquid particle separation device the means for draining the membrane housing comprises a drain valve in fluid communication with the feed source so that the liquid particle mixture in the membrane housing is drained through the feed source. The drained liquid particle mixture can then easily be filtered or separated by the membrane when the functional capacity of the membrane has been restored and the feed source is feeding liquid particle mixture into the membrane housing. Liquid particle mixture in the membrane housing on the feed source of the membrane is unfiltered or unseparated. It is therefore advantageous to drain the liquid particle mixture from the membrane housing to the feed source so that no liquid particle mixture is left unfiltered or unseparated.

In an embodiment of the liquid particle separation device the liquid particle separation device can comprise a flowmeter for measuring the flow of liquid particle mixture or flow of filtered or separated permeate.

If the feed source feeds liquid particle mixture through the membrane at a constant pressure the flow registered by the flowmeter will decline when the membrane is getting fouled. The flowmeter will give a reliable indication whether the membrane has to be cleaned, and optionally the flowmeter could be adapted to send or return a signal to a processor that controls the filtering or separating process of the liquid particle mixture that the membrane has to be cleaned when the flow fall below a certain preset value.

A processor that controls the filtering or separating process of the liquid particle mixture and receives information about the flow through the flowmeter will interrupt the filtering or separating process to have the membrane housing drained and the membrane cleaned by injection of ozone gas. Using the flowmeter the process can be totally automatic.

The device of the present invention may include additional means to control and regulate the method performed using the liquid particle separation device of the present invention, such means may include pressure sensors, extra valves, temperature sensors, etc.

For example the feed source can comprise a feed source pressure gauge, and the permeate means can comprise a permeate means pressure gauge.

Using the feed source pressure gauge and the permeate means pressure gauge, it is easy to determine whether the membrane is fouled. An increase in the pressure measured by the feed source pressure gauge compared to the pressure measured by the permeate means pressure gauge will tell that the membrane is getting more and more fouled. A processor that controls the filtering or separating process of the liquid particle mixture and receives information about the pressures from the feed source pressure gauge and the permeate means pressure gauge will interrupt the filtering or separating process to have the membrane housing drained and the membrane cleaned by injection of ozone gas, optionally adjust the injection pressure to the established degree of fouling, such as residual fouling after an initial main ozone injection cleaning, if necessary. Using the feed source pressure gauge and the permeate means pressure gauge the process can be totally automatic.

In an embodiment of the liquid particle separation device the feed source can comprise a first pump for pressurising the liquid particle mixture into the membrane housing and a second pump for pumping liquid particle mixture through the membrane channels to create a crossflow that continuously clean the at least one membrane, optionally the first pump and the second pump can be the same. A pump is able to yield the necessary pressure of the liquid particle mixture in the feed source to press liquid particle mixture through the at least one membrane.

Advantageously, the at least one membrane of the liquid particle separation device can be a ceramic membrane, since a ceramic membrane does not degrade or decompose when exposed to ozone gas. Ceramic materials are generally very stable chemically, thermally and mechanically. Ceramic membranes can provide stable water treatment continuously and the filtration performance is not compromised even in high turbidity situations. The usable lifetime of a restorable ceramic membrane can be as long as 15 years or even more, and later the ceramic material of the membrane can be re-used for other purposes. Accordingly, the ceramic membrane is an environmental friendly membrane that does not generate waste.

Ceramic membranes normally have an asymmetrical structure composed of at least two, mostly three, different porosity levels. Indeed, before applying an active, microporous top layer, a mesoporous intermediate layer is often applied in order to reduce the surface roughness. A macroporous support ensures the mechanical resistance of the membrane. The most common ceramic membranes are made of Al, Si, Ti or Zr oxides and the membrane is conventionally used in cross flow filtration in which the feed stream flows parallel to the membrane filtration surface.

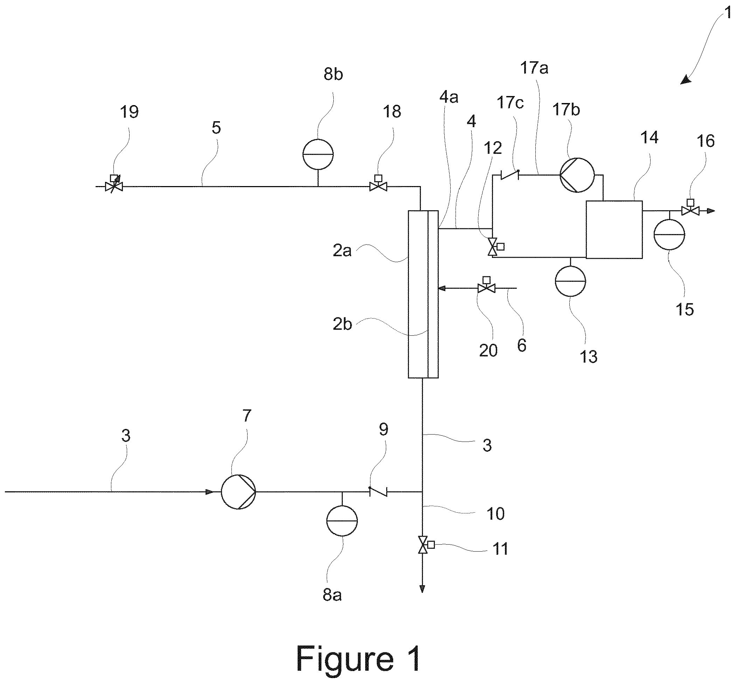

The invention will now be described in further details with reference to the drawing in which the sole figure schematically shows an example of a water or liquid particle separation device 1 for filtering or separating liquid particle mixture.

The liquid particle separation device 1 comprises a membrane housing 2a with a membrane 2b, a feed pipe 3 for feeding liquid particle mixture into the membrane housing 2a, a permeate pipe 4 for receiving filtered or separated permeate through a permeate outlet 4a from the membrane housing 2a after having passed through the membrane 2b, a retentate pipe 5, for receiving sludge or particles from the membrane housing 2a, and a ozone gas source 6.

The feed pipe 3 comprises a feed pump 7 for pumping the liquid particle mixture into the membrane housing 2a and through the membrane 2b, a feed pipe pressure gauge 8a, and a first check valve 9 only allowing fluid to pass from the feed pump 7 to the membrane 2b. Attached to the feed pipe 3 is a drain pipe 10 with a drain valve 11.

The permeate pipe 4 comprises a first permeate valve 12, a permeate pressure gauge 13, a backflush tank 14, a flowmeter 15, and a second permeate valve 16. A second pipe 17a connects parallel to the first permeate valve 12 the backflush tank 14 and the permeate outlet 4b, and comprises a permeate pump 17b and a permeate check valve 17c only allowing fluid to pass from the permeate pump 17b to the permeate outlet 4b.

Instead of the second pipe 17a with the permeate pump 17b and the permeate check valve 17c, there can be a compressed air valve (not shown) connected to the backflush tank 14 at the same position as the second pipe 17a. Compressed air can with this set-up be fed into the backflush tank 14 when the compressed air valve is open.

The retentate pipe 5 comprises a retentate valve 18, and a retentate pressure gauge 8b and a regulating valve 19.

Ozone gas from the ozone gas source 6 enters the membrane housing 2a on the permeate side of the membrane 2b when an ozone source valve 20 is opened, passes through the membrane 2b, and exits the membrane housing 2a via the feed pipe 3.

When starting the filtering or separation of the liquid particle mixture the drain valve 11 and the ozone source valve 20 are closed, the first 12 and second 16 permeate valves as well as the retentate valve 18 are opened and the feed pump 7 is started.

By regulating the regulating valve 19 of the retentate pipe 5 and measuring the pressure by the retentate pressure gauge 8b a high enough pressure in the feed pipe 3 can be kept so that the liquid in the liquid particle mixture is pressed through the membrane 2b into the permeate pipe 4 and the backflush tank 14, and through the second permeate valve 16, while the particles or sludge from the liquid particle mixture enter the retentate pipe 5.

After a while of liquid particle mixture filtering or liquid particle separation, deposits or fouling will build up inside the membrane 2b causing the feed pump 7 to work harder or the flow of filtered permeate through the permeate pipe 4 to decrease or a combination of both. This can be discovered by an increase in the so-called transmembrane pressure, which is the pressure difference measured by the feed pipe pressure gauge 8a and permeate pressure gauge 13 when the flow is more or less kept constant. That deposits are built up in the membrane can also or instead be detected by a drop in the flow measured by the flowmeter 15 when the transmembrane pressure or the power of the feed pump 7 is kept more or less constant.

When the energy consumption to drive the feed pump 7 is too high and/or the flow of filtered or separated permeate is too low the membrane 2b has too be cleaned.

To clean the membrane 2b, the feed pump 7 is switched off, the first permeate valve 12 and the retentate valve 18 are closed, and then the drain valve 11 is opened. Liquid particle mixture inside the membrane housing 2a will be drained through the drain valve 11 and out through the drain pipe 10. When the membrane housing is more or less emptied the ozone source valve 20 is opened letting ozone gas into the membrane housing, through the membrane 2b and out through the drain pipe 10.

The ozone gas will oxidize the deposits inside the membrane 2b so that the deposits are broken down and the pressure of the ozone gas will push the deposits out of the membrane through the drain pipe.

When the membrane 2b is cleaned the ozone source valve 20 is closed.

Optionally the membrane can be further cleaned by flushing filtered or separated permeate from the backflush tank 14. In that case, the second permeate valve 16 is closed as well as the first permeate valve 12 followed by the starting of the permeate pump 17b that will pump the permeate in the backflush tank 14 through the membrane and out of the drain pipe 10 so that any remaining deposits in the membrane are removed.

In case the permeate line 4 is equipped with the compressed air valve (not shown) instead of the permeate pump 17b the optional cleaning of the membrane 2b by the permeate is provided by opening the compressed air valve while keeping the first permeate valve 12 open and the second permeate valve 16 closed so that the permeate in the backflush tank 14 is pressurised to flow through and clean the membrane 2b.

After that, the filtering or separating cycle can be repeated since the membrane is clean and ready to filter another volume of liquid particle mixture.

### Example 1: Filtering of seawater for use in fish farming:

A 0.04 **µ**m ceramic membrane produced by Liqtech was used with an outer diameter of 25 mm and a length of 305 mm. The flux (liter per m² per hour (LMH)) through the membrane at start up was 2500 LMH at a transmembrane pressure (TMP) of 0,82 bar. After 3 h of filtering the flux had declined to 446 LMH keeping the TMP constant. By exposing the membrane to 120 gO₃/Nm³ for 5 min. at ozone pressure of 2 bar it is possible to completely regenerate the membrane so that the flux again is 2500 LMH at this pressure. The used ozone will break down into harmless O₂.

### Example 2: Filtrering of biologically sewage:

A 0.04 **µ**m ceramic membrane produced by Liqtech was used with an outer diameter of 146 mm and a length of 865 mm. The flux through the membrane at start up was 1375 LMH at a TMP of 0,68 bar. After 4.5 h of filtering the flux had declined to 375 LMH keeping the TMP constant. By exposing the membrane to 200 gO₃/Nm³ for 5 min. at ozone pressure of 2 bar it is possible to completely regenerate the membrane so that the flux again is 1375 LMH at this pressure.

A corresponding clean-in-place sequence using chemicals to clean the membrane of example 1 or 2 will need chemicals, which are typically commercially available alkaline membrane cleaners, and hot water added into the membrane housing. The cleaning process will take around 60 min. and the alkaline cleaner mixed with water has to be taken care of e.g. by transporting the mixture to a place where the chemicals can be recovered.

## Claims

1. A method of at least partly restoring functional capacity of at least one membrane (2b) for filtering or separating a flow of liquid particle mixture, wherein the at least one membrane (2b) is situated in a membrane housing (2a) having at least a feed inlet (3) and a permeate outlet (4a), **characterized in that** the method comprises the steps of
a) emptying the membrane housing (2a) at least partly of liquid particle mixture via an emptying outlet (10), and
b) subjecting the at least one membrane (2b) to a jet of ozone gas crosswise the at least one membrane (2b), which jet is injected into the membrane housing (2a) via an ozone inlet and leaves the membrane housing (2a) via an ozone outlet.

2. A method according to claim 1, **characterized in that** the pressure of the ozone gas empties the membrane housing (2a) by blowing out at least a part of the liquid particle mixture.

3. A method according to claim 1 or 2, **characterized in that** the direction of the ozone gas through the at least one membrane (2b) is opposite to the flow of liquid particle mixture through the at least one membrane (2b) when filtering or separating the liquid particle mixture.

4. A method according to any of the claims 1 - 3, **characterized in that** the method further comprises step c) of flushing permeate collected at the permeate outlet (4a) through the at least one membrane (2b) after having subjected the at least one membrane (2b) to the ozone gas, optionally recycling the flushed permeate to the flow of liquid particle mixture to be filtered or separated by the at least one membrane (2b).

5. A method according to claim 4, **characterized in that** the permeate is flushed through the at least one membrane (2b) by blowing compressed gas or air through a backflush tank (14) connected to the permeate outlet (4a).

6. A method according to claim 4, **characterized in that** the permeate is flushed through the at least one membrane (2b) by pumping the permeate from a backflush tank (14) connected to the permeate outlet (4a).

7. A liquid particle separation device (1) comprising at least one membrane (2b) situated in a membrane housing (2a), a feed source (3) for feeding liquid particle mixture into the membrane housing (2a), a permeate means (4,4a) for receiving filtered or separated permeate from the membrane housing (2a), and a retentate means (5), for receiving particles or sludge from the membrane housing (2a), **characterized in that** the liquid particle separation device (1) further comprises a means (10) for draining or emptying the membrane housing (2a), and an ozone gas source (6) connected to the membrane housing (2a) for injecting ozone gas into the drained or emptied membrane housing (2a), through the at least one membrane (2b), and out of the membrane housing (2a).

8. A liquid particle separation device (1) according to claim 7, **characterized in that** the ozone gas source (6) is in fluid communication with the membrane housing (2a) at the permeate means (4,4a).

9. A liquid particle separation device (1) according to claim 7 or 8, **characterized in that** the permeate means (4,4a) comprises one or more of a permeate line (4) with a permeate valve (16), a backflush tank (14) between the permeate valve (16) and the membrane housing (2a), and a gas line with compressed air or gas, which gas line is connected to the backflush tank (14).

10. A liquid particle separation device (1) according to claim 7 or 8, **characterized in that** the permeate means (4,4a) comprises one or more of a permeate line (4) with a permeate valve (16), a backflush tank (14) between the permeate valve (16) and the membrane housing (2a), and a permeate pump (17b) connected to the backflush tank (14) for pumping permeate from the backflush tank (14) through the membrane housing (2a) and the at least one membrane (2b).

11. A liquid particle separation device (1) according to any of the claims 7 - 10, **characterized in that** the means (10) for draining or emptying the membrane housing (2a) comprises a drain or emptying valve (11) in fluid communication with the feed source (3).

12. A liquid particle separation device (1) according to any of the claims 7 - 11, **characterized in that** the liquid particle separation device (1) comprises a flowmeter (15) for measuring the flow of liquid particle mixture or flow of filtered or separated permeate.

13. A liquid particle separation device (1) according to any of the claims 7 - 12, **characterized in that** the feed source (3) comprises a feed source pressure gauge (8a), and the permeate means (4,4a) comprises a permeate means pressure gauge (13).

14. A liquid particle separation device (1) according to any of the claims 7 - 13, **characterized in that** the feed source (3) comprises a first pump for pumping the liquid particle mixture into the membrane housing (2a), and a second pump (7) for pumping filtered or separated liquid through the at least one membrane (2b), optionally the first pump and the second pump are the same.

15. A liquid particle separation device (1) according to any of the claims 7 - 14, **characterized in that** the at least one membrane (2b) is a ceramic membrane.
